Europäisches Patentamt

**European Patent Office**

Office européen des brevets

(11) Numéro de publication: **0 088 722**
A1

# DEMANDE DE BREVET EUROPEEN

(21) Numéro de dépôt: 83810054.3

(22) Date de dépôt: 08.02.83

(51) Int. Cl.³: **G 01 K 11/12**, G 01 K 11/00

(30) Priorité: 09.03.82 CH 1427/82

(71) Demandeur: **CABLOPTIC S.A., CH-2016 Cortaillod (CH)**

(43) Date de publication de la demande: **14.09.83**
**Bulletin 83/37**

(72) Inventeur: **Falco, Lucien, Vignoble 68,**
**CH-2087 Cornbaux (CH)**

(84) Etats contractants désignés: **AT BE CH DE FR GB IT LI**
**LU NL SE**

(74) Mandataire: **Nithardt, Roland, CABINET ROLAND**
**NITHARDT Rue Edouard Verdan 15, CH-1400 Yverdon**
**(CH)**

(54) **Procédé de mesure de la température par voie optique et dispositif pour la mise en oeuvre de ce procédé.**

(57) Le procédé selon l'invention est caractérisé en ce que l'on injecte un faisceau de lumière blanche à une extrémité d'un conducteur de lumière $F_1$, en ce que l'on éclaire, au moyen du faisceau émergent du conducteur de lumière, un premier prisme transparent $P_1$ dont l'indice de réfraction varie en fonction de la température, en ce que l'on injecte dans un second conducteur de lumière $F_2$ une partie du faisceau émergent du prisme $P_1$ et correspondant à une bande étroite de longueur d'onde. On détecte ensuite la longueur d'onde de cette bande étroite au moyen d'un détecteur, et l'on déduit la température de la sonde en fonction de cette longueur d'onde au moyen d'un décodeur.

EP 0 088 722 A1

PROCEDE DE MESURE DE LA TEMPERATURE PAR VOIE OPTIQUE
ET DISPOSITIF POUR LA MISE EN OEUVRE DE CE PROCEDE

On connaît déjà un procédé de mesure optique de la température, basé sur la propriété des cristaux cholestériques pour provoquer une réflexion de Bragg pour la lumière incidente et, par là, de ne réfléchir qu'une tranche de longueur d'onde donnée par la condition de Bragg. Cette condition dépendant de la température, il est possible, par identification de la longueur d'onde de la lumière réfléchie, de déterminer la température du cristal liquide. Ce procédé, ainsi que le dispositif de mise en oeuvre de ce procédé, sont décrits par la demande de brevet suisse n° 124/80 (brevet n°        ).

La présente invention propose un autre procédé de mesure de la température par voie optique, ainsi qu'un dispositif de mise en oeuvre de ce procédé, basés sur la variation de l'indice de réfraction d'un matériau transparent en fonction de la température.

Le procédé selon l'invention est caractérisé en ce que l'on injecte un faisceau de lumière blanche à une extrémité d'un conducteur de lumière, en ce que l'on éclaire, au moyen du faisceau émergent du conducteur de lumière, un premier prisme transparent dont l'indice de réfraction varie en fonction de la température, en ce que l'on injecte, dans un conducteur de lumière, une partie du faisceau émergent du premier prisme et correspondant à une bande étroite de longueur d'onde , en ce que l'on détecte la longueur d'onde de cette bande étroite au moyen d'un détecteur, et en ce que l'on déduit la température de la sonde en fonction de cette longueur d'onde au moyen d'un décodeur.

Le dispositif selon l'invention est caractérisé en ce qu'il comporte une source de lumière blanche, un premier conducteur de lumière, un prisme transparent dont l'indice de réfraction varie en fonction de la température, ce prisme étant éclairé par la lumière blanche émise par la source et transportée par le premier conducteur de lumière, un second conducteur de lumière dont une extrémité est disposée dans le faisceau dispersé émergent du premier prisme, et un détecteur connecté à l'autre extrémité du second conducteur de lumière.

La présente invention sera mieux comprise en référence à la description d'exemples de réalisation et du dessin annexé, dans lequel :

La figure 1 représente schématiquement le dispositif de mesure de la température par voie optique selon l'invention,

La figure 2 représente schématiquement une première forme de réalisation de la sonde de température du dispositif de la fig. 1,

La figure 3 représente une variante de la sonde de température illustrée par la fig. 2,

La figure 4 représente une autre forme de réalisation de la sonde de température utilisée dans le dispositif illustré par la fig. 1,

La figure 5 représente une variante de la sonde de température représentée par la fig. 4,

La figure 6 représente une forme de réalisation particulière du détecteur du dispositif de la fig. 1,

La figure 7 représente une autre forme de réalisation du détecteur utilisé dans le dispositif illustré par la fig. 1, et

La figure 8 représente une forme de réalisation particulière du détecteur lié à un dispositif de décodage utilisé dans le dispositif illustré schématiquement par la fig. 1.

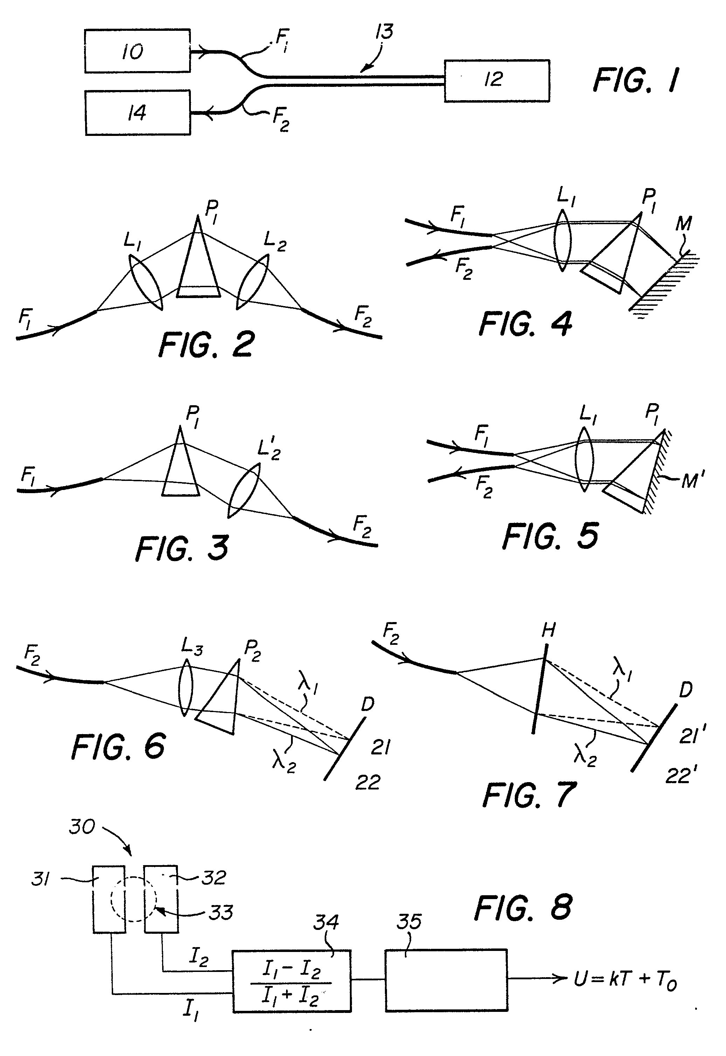

La fig. 1 représente schématiquement le dispositif de mesure de la température par voie optique, et comporte une source de lumière blanche 10, un premier conducteur de lumière $F_1$, une sonde de température 12, un second conducteur de lumière $F_2$ et un ensemble détecteur-décodeur 14. La source de lumière blanche 10 et l'ensemble détecteur-décodeur 14 sont en général disposés dans une salle de mesure et d'interprétation des résultats, et sont reliés à la sonde de température 12 placée dans un espace dont on peut mesurer les variations de température au moyen d'un câble optique 13 comprenant de préférence les deux fibres optiques

$F_1$ et $F_2$. Toutefois, cette liaison pourrait, dans certains cas, être effectuée par un câble optique ne comportant qu'une seule fibre servant à l'aller et au retour des signaux transmis.

La sonde de température représentée par la fig. 2 se compose essentiellement d'un prisme $P_1$ et de deux lentilles convergentes $L_1$ et $L_2$ disposées de part et d'autre du prisme $P_1$. Le faisceau de lumière blanche, issu de la fibre optique $F_1$, est dispersé par le prisme $P_1$, de sorte que seule une bande étroide de longueur d'onde est injectée dans la fibre $F_2$. La bande sélectionnée dépend de la géométrie (angle de déviation, angle du prisme), du matériau (indice de réfraction, dispersion) et de la température en raison de la dépendance de l'indice du prisme avec la température à laquelle il est porté. Grâce à cette dépendance, la bande étroite de longueur d'onde , injectée dans la fibre $F_2$, varie en même temps que la température du prisme $P_1$, de sorte que l'analyse de cette variation permet de déterminer la variation de la température de la sonde de mesure, et grâce à une courbe d'étalonnage, la température réelle à laquelle se trouve la sonde. A titre d'exemple, la longueur d'onde du faisceau injecté dans la fibre $F_2$ peut varier de 800 à 500 nm lorsque l'on chauffe le prisme $P_1$ de 0 à 100°C. Ce prisme peut être réalisé en matière synthétique ou par une cuvette creuse remplie d'un liquide. Une gamme de température plus large peut être couverte lorsqu'on utilise un prisme taillé dans un cristal approprié.

La fig. 3 représente une variante selon laquelle le système convergent, constitué par les lentilles $L_1$ et $L_2$ du dispositif de la fig. 2, a été remplacé par une seule lentille $L'_2$ agencée pour focaliser le faisceau émergent du prisme $P_1$ sur la fibre optique $F_2$.

Dans ces deux exemples, les fibres $F_1$ et $F_2$ sont disposées de part et d'autre du prisme $P_1$. Le dispositif de la fig. 4 comporte une surface réfléchissante, par exemple un miroir plan M, qui renvoie le faisceau dispersé à travers le prisme $P_1$ et la lentille $L_1$ qui focalise le faisceau réfléchi sur la fibre optique $F_2$.

Dans l'exemple illustré par la fig. 5, le miroir plan de la sonde représentée par la fig. 4 a été remplacé par une surface réfléchissante M' obtenue par métallisation de la face de sortie du prisme $P_1$.

Pour déterminer la température à laquelle se trouve la sonde, il importe de déterminer la longueur d'onde du faisceau renvoyé dans la fibre $F_2$. Cette détection peut se faire par différentes techniques, par exemple à l'aide d'un monochromateur, d'un filtre interférentiel variable, etc... Une des solutions avantageuses consiste à utiliser un principe similaire à celui qui a été utilisé dans la sonde de température. A cet effet, le détecteur représenté par la fig. 2 comporte un second prisme $P_2$, une lentille convergente $L_3$ et un élément sensible D. Le prisme $P_2$ est choisi en un matériau dont l'indice de réfraction est sensiblement stable en fonction de la température pour la plage des températures ambiantes. Il est par exemple réalisé en verre ou en quartz fondu. Par suite de la dispersion du prisme $P_2$, la position de la tache sur l'élément sensible D se déplace latéralement lorsque la longueur d'onde change. C'est ainsi que pour un premier faisceau de longueur d'onde $\lambda_1$, on obtient une tache 21 sur l'élément sensible et pour un second faisceau émergent de la fibre $F_2$ ayant une longueur d'onde $\lambda_2$ tel que $\lambda_1 > \lambda_2$, on obtient une seconde tache 22 sur l'élément sensible D. Pour décoder l'information, on utilise un élément sensible D, sensible à la position de l'impact du faisceau, par exemple un décodeur double illustré par la fig. 8.

La fig. 7 illustre une variante selon laquelle le prisme $P_2$ et la lentille $L_3$ ont été remplacés par une lentille holographique H qui permet d'obtenir le même effet, c'est-à-dire de disperser le faisceau incident pour aboutir à deux taches distinctes 21' et 22', pour des longueurs d'ondes différentes $\lambda_{2'}$ et $\lambda_{1'}$.

La fig. 8 illustre un dispositif de détection et de décodage permettant la lecture directe de la mesure de température effectuée par la sonde. L'élément sensible 30 est constitué par deux cellules photoélectriques 31 et 32 juxtaposées et disposées de telle manière que l'impact du faisceau émergent du prisme $P_2$ ou de l'hologramme H forme une tache lumineuse 33 centrée sur les cellules 31 et 32. La géométrie de ces cellules est choisie de telle manière que la tache lumineuse se translate de l'une à l'autre, pour l'excursion désirée de longueur d'onde. Si

$I_1$ et $I_2$ sont les signaux électriques délivrés par les deux secteurs de l'élément détecteur, la fonction

$$\frac{I_1 - I_2}{I_1 + I_2}$$

varie entre +1 et -1. Un calculateur électronique 34 transmet cette fonction à un dispositif de linéarisation 35, dont le signal de sortie U correspond à la fonction $U = KT + T_0$, où K et $T_0$ sont des constantes et T est la température à laquelle est portée la sonde de température.

Un des avantages importants de ce procédé est d'offrir une isolation électrique absolue entre la sonde de température et le poste de mesure. Cet avantage est particulièrement intéressant lorsque les mesures de température doivent être effectuées dans des zones où règnent des champs électromagnétiques intenses.

Revendications

1. Procédé de mesure de la température par voie optique, caractérisé en
ce que l'on injecte un faisceau de lumière blanche à une extrémité d'un
conducteur de lumière, en ce que l'on éclaire, au moyen du faisceau
émergent du conducteur de lumière, un premier prisme transparent dont
l'indice de réfraction varie en fonction de la température, en ce que
l'on injecte, dans un conducteur de lumière, une partie du faisceau
émergent du premier prisme et correspondant à une bande étroite de
longueur d'onde , en ce que l'on détecte la longueur d'onde de cette
bande étroite au moyen d'un détecteur, et en ce que l'on déduit la température de la sonde en fonction de cette longueur d'onde au moyen d'un
décodeur.

2. Procédé selon la revendication 1, caractérisé en ce que l'on injecte
le faisceau de lumière blanche dans une première fibre optique, et en
ce que l'on injecte la partie du faisceau émergent correspondant à la
bande étroite de longueur d'onde dans une seconde fibre optique.

3. Procédé selon la revendication 1, caractérisé en ce que l'on détermine la longueur d'onde de la bande étroite en éclairant, à l'aide de
la partie du faisceau émergent du premier prisme et correspondant à
cette bande étroite de longueur d'onde , un second prisme dont l'indice de réfraction est sensiblement stable en fonction de la température
pour une plage de températures ambiantes, et en ce que l'on focalise le
faisceau émergent dudit second prisme sur un détecteur sensible à la
position de l'impact du faisceau, ce détecteur fournissant un signal de
position dépendant de la longueur d'onde de la partie du faisceau émergent du premier prisme, correspondant à la température à laquelle est
portée la sonde.

4. Procédé selon la revendication 1, caractérisé en ce que l'on détermine la longueur d'onde de la bande étroite en éclairant, à l'aide de
la partie du faisceau émergent du premier prisme et correspondant à
cette bande étroide de longueur d'onde , une lentille holographique
agencée pour focaliser le faisceau émergent sur un détecteur sensible
à la position de l'impact du faisceau, ce détecteur fournissant un signal de position dépendant de la longueur d'onde de la partie du faisceau émergent du premier prisme, correspondant à la température à laquelle est portée la sonde.

5. Dispositif de mesure de la température par voie optique, caractérisé en ce qu'il comporte une source de lumière blanche, un premier conducteur de lumière, un prisme transparent dont l'indice de réfraction varie en fonction de la température, ce prisme étant éclairé par la lumière blanche émise par la source et transportée par le premier conducteur de lumière, un second conducteur de lumière dont une extrémité est disposée dans le faisceau dispersé émergent du premier prisme, et un détecteur connecté à l'autre extrémité du second conducteur de lumière.

6. Dispositif selon la revendication 5, caractérisé en ce que le détecteur comporte un second prisme réalisé en un matériau dont l'indice de réfraction est sensiblement stable en fonction de la température pour une plage de températures ambiantes, un système optique convergent pour focaliser le faisceau émergent de ce second prisme, et un détecteur sensible à la position de l'impact de ce faisceau sur le détecteur.

7. Dispositif selon la revendication 5, caractérisé en ce que le détecteur comporte une lentille holographique agencée pour focaliser le faisceau émergent sur un détecteur sensible à la position de l'impact de ce faisceau.

8. Dispositif selon la revendication 5, caractérisé en ce que le premier et le second conducteur de lumière sont constitués respectivement par une première et une seconde fibre optique disposées de part et d'autre du premier prisme.

9. Dispositif selon la revendication 5, caractérisé en ce qu'il comporte une surface réfléchissante, ledit premier et ledit second conducteur de lumière étant constitués respectivement par une première et un seconde fibre optique, disposées du même côté de la surface réfléchissante que le premier prisme.

10. Dispositif selon la revendication 6, caractérisé en ce que le détecteur, sensible à la position de l'impact du faisceau émergent, est constitué par deux cellules sensibles juxtaposées, disposées de telle manière que l'impact du faisceau émergent est localisé sur l'une, l'autre ou partiellement sur les deux cellules sensibles.

FIG. 1

FIG. 2

FIG. 3

FIG. 4

FIG. 5

FIG. 6

FIG. 7

FIG. 8

$$U = kT + T_0$$

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl. 3) |
|---|---|---|---|
| X | EP-A-0 014 848 (ROCKWELL INTERNATIONAL CORP.) * Titre; figure 2; page 6, alinéa 1 - page 8, alinéa 1 * | 1-8 | G 01 K 11/12 G 01 K 11/00 |
| X,Y | US-A-4 307 607 (E.W. SAASKI et al.) * Figures 1,4-7; colonne 3, ligne 24 - colonne 4, ligne 19; colonne 8, ligne 12 - colonne 11, ligne 27 * | 1,2,5, 9 | |
| Y | PATENTS ABSTRACTS OF JAPAN, vol. 5, no. 185(P-91)(857), 25 novembre 1981 & JP - A - 56 112 620 (TOKAYO SHIBAURA DENKI K.K.) 05-09-1981 * Résumé * | 1,5 | |
| | | | DOMAINES TECHNIQUES RECHERCHES (Int. Cl. 3) |
| A | DE-B-1 281 174 (A. KUCKENS) * En entier * | 10 | G 01 K 11/00 |

Le présent rapport de recherche a été établi pour toutes les revendications

| Lieu de la recherche | Date d'achevement de la recherche | Examinateur |
|---|---|---|
| LA HAYE | 17-06-1983 | VISSER F.P.C. |